# EUROPEAN PATENT SPECIFICATION

(11) **EP 1 372 227 B1**
(45) Date of publication and mention of the grant of the patent: **07.08.2013**
(21) Application number: 03012197.4
(22) Date of filing: 05.06.2003
(51) Int. Cl.: H01R 39/38

(54) **Dynamoelectric machine and method for mounting brush assembly to a brush holder**
Dynamoelektrische Maschine und Montageverfahren für Bürstenanordnung zu einem bürstenhalter
Machine dynamo-électrique et méthode de montage de balais à un support

(30) Priority: 12.06.2002 JP 2002171310
(43) Date of publication of application: 17.12.2003
(73) Proprietor: MITSUBISHI DENKI KABUSHIKI KAISHA, Chiyoda-ku Tokyo 100-8310 (JP)
(72) Inventor: Inoue, Hirokazu, Chiyoda-ku, Tokyo 100-8310 (JP); Kitahara, Hidehiko, Chiyoda-ku, Tokyo 100-8310 (JP); Hayashi, Hideyuki, Chiyoda-ku, Tokyo 100-0004 (JP); Takahashi, Tomoki, Chiyoda-ku, Tokyo 100-0004 (JP)
(74) Representative: HOFFMANN EITLE

(56) References cited:
- EP-A- 1 109 272
- DE-C- 762 022
- FR-A- 2 723 482
- US-A- 3 005 078
- US-A- 4 554 476
- US-A- 5 262 694

## Description

### 1. Field of the Invention

The present invention relates to a dynamoelectric machine such as an automotive alternator, for example, and particularly to a brush assembly construction for a dynamoelectric machine and a method for mounting a brush assembly to a brush holder enabling improved mounting of the brush assembly.

### 2. Background art

Generally, a brush holding apparatus in a dynamoelectric machine such as an automotive alternator, for example, is mounted internally in a tightly-closed case, making it is necessary to dismantle the case during brush replacement, thereby making workability extremely poor.

Thus, an automotive alternator in which an opening is disposed in a portion of the case facing the brush holding apparatus, enabling the brushes to be changed through the opening, has been proposed in Japanese Patent Laid-Open No. SHO 51-66409 (Gazette), etc., for example.

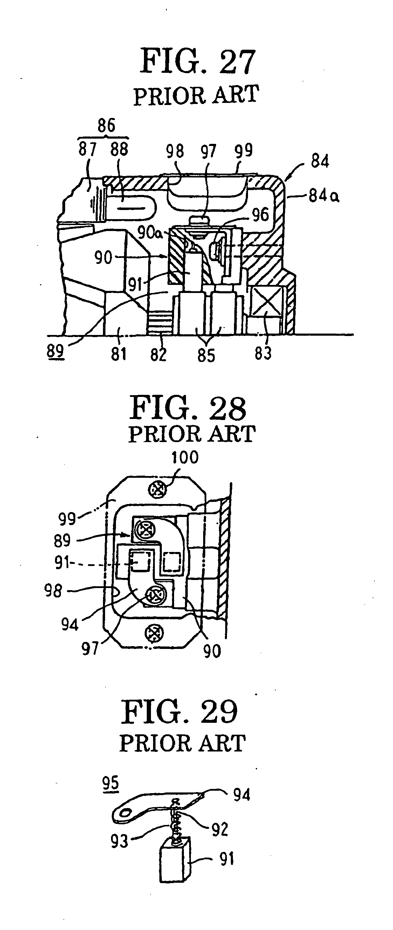

Figures 27 and 28 are a partial longitudinal section and a plan, respectively, showing a vicinity of the brush holding apparatus of the conventional automotive alternator described in Japanese Patent Laid-Open No. SHO 51-66409, for example, and Figure 29 is a perspective showing a brush assembly used in the brush holding apparatus shown in Figures 27 and 28.

In Figures 27 to 29, a rotor 81 is fixed to a shaft 82 rotatably supported in a front bracket (not shown) and a rear bracket 84a by means of bearings 83, being disposed inside a case 84 composed of the front bracket and the rear bracket 84a. Slip rings 85 are mounted to a rear-end end portion of the shaft 82.

A stator 86 is constituted by: a cylindrical stator core 87; and a stator winding 88 installed in the stator core 87, first and second end portions of the stator core 87 being held between the front bracket and the rear bracket 84a, the stator 86 being disposed so as to surround the rotor 81.

A brush holding apparatus 89 is constituted by: a brush body portion 90 through which a pair of brush-housing angular apertures 90a are disposed; and a pair of brush assemblies 95 in each of which a brush 91, a pigtail 92, a brush spring 93, and a brush terminal 94 are assembled integrally. This brush holding apparatus 89 is mounted to the rear bracket 84a by securely fastening the brush body portion 90 to an inner wall surface of an end portion of the rear bracket 84a by means of a bracket screw 96, inserting the brushes 91 of each of the brush assemblies 95 into the brush-housing angular apertures 90a, and securely fastening the brush terminals 94 to the brush body portion 90 by means of terminal screws 97. Thus, the brushes 91 are forced into contact with the slip rings 85 by the brush springs 93.

In addition, an opening 98 for brush replacement is disposed through a portion of a side wall of the rear bracket 84a facing the brush body portion 90. A cover 99 is securely fastened to an outer circumferential surface of the side wall of the rear bracket 84a by means of cover screws 100 so as to cover the opening 98.

A brush replacement operation for the conventional automotive alternator constructed in this manner will now be explained.

First, the cover 99 is removed by removing the cover screws 100. Then, the terminal screws 97 are removed and the brush assemblies 95 are pulled out through the opening 98. Next, the brushes 91 of new brush assemblies 95 are inserted into the brush-housing angular apertures 90a, and the brush terminals 94 are pressed toward the slip rings 85 until the brush terminals 94 are placed in contact with mounting terminals 90b on the brush body portion 90. At this time, the brush springs 93 are compressed, and the pigtails 92 are housed inside the brush springs 93 in a flexed state and become entangled. Then, the brush terminals 94 are securely fastened to the mounting terminals 90b of the brush body portion 90 by means of the terminal screws 97 while pressing the brush springs 93. In addition, the cover 99 is placed over the opening 98 and securely fastened to the rear bracket 84a by means of the cover screws 100, completing replacement of the brushes 91.

In the conventional automotive alternator, the brush assemblies 95 are each assembled by passing a pigtail 92 having a first end joined to a brush 91 through a brush spring 93 formed into a coil shape and joining a second end of the pigtail 92 to a brush terminal 94 with the brush spring 93 in a compressed state. Thus, because the brush springs 93 are not restricted at all relative to a direction of bending, the flexed portions of the pigtails 92 may be pinched by the brush springs 93 or may apply bending stress to the brush springs 93 during the process of pressing the brush terminals 94 after inserting the brushes 91 into the brush-housing angular apertures 90a, giving rise to bending of the brush springs 93. In addition, because there are no members to guide the brush springs 93 as they are being compressed, if the balance of the pressure acting on the brush springs 93 becomes uneven, the brush springs 93 may become bent.

Consequently, because portions of the brush springs 93 projecting out of the brush-housing angular apertures 90a bend and flop over in the process of pressing the brush terminals 94, one problem has been that workability when mounting the brush assemblies 95 to the brush body portion 90 has been poor.

US 5 262 694 A discloses subject-matter relating to the preamble to Claim 1. EP 1 109 272 A and US 4 554 476 A are documents which may be of use in understanding the background to the present invention.

### SUMMARY OF THE INVENTION

The present invention aims to solve the above problems and an advantage of embodiments of the present invention is to provide a dynamoelectric machine enabling workability in mounting a brush assembly to a brush holder to be improved by disposing inside a brush spring a guide member for guiding compression of the brush spring and for internally housing a flexed portion of a pigtail arising during a process of compressing the brush spring to suppress flopping over of the brush spring during mounting of the brush assembly and pinching of the flexed portion of the pigtail in the brush spring.

Another advantage of embodiments of the present invention is to provide a method for mounting a brush assembly to a brush holder enabling mounting workability to be improved by maintaining a brush spring in a compressed state having a predetermined length while inserting a brush into a brush insertion aperture of the brush holder to prevent flopping over of the brush spring during mounting of the brush assembly to the brush holder.

Yet another advantage of embodiments of the present invention is to provide a method for mounting a brush assembly to a brush holder enabling mounting workability to be improved by using a guide member as a guide with a brush of the brush assembly inserted into a brush insertion aperture of the brush holder while compressing a brush spring to prevent flopping over of the brush spring during mounting of the brush assembly to the brush holder.

According to one aspect of the invention, there is provided a dynamoelectric machine as recited in Claim 1 below.

Therefore, provided is the dynamoelectric machine enabling workability in mounting the brush assembly to the brush holder to be improved by suppressing flopping over of the brush spring and pinching of a flexed portion of the pigtail in the brush spring during mounting of the brush assembly.

According to another aspect of the present invention, there is provided a method for mounting a brush assembly to a brush holder mounted to a dynamoelectric machine as recited in Claim 8 below.

Therefore, provided is the method for mounting a brush assembly to a brush holder enabling mounting workability to be improved by preventing flopping over of the brush spring during mounting of the brush assembly to the brush holder.

### BRIEF DESCRIPTION OF THE DRAWINGS

To better understand the present invention and to show how the same may be carried into effect reference will now be made, by way of example only, to the accompanying drawings, in which:
Figure 1 is a longitudinal section showing an automotive alternator according to Embodiment 1 of the present invention;
Figure 2 is a partially cut away end elevation showing a rear bracket end of an interior portion of the automotive alternator according to Embodiment 1 of the present invention;
Figure 3 is a plan showing a brush holding apparatus used in the automotive alternator according to Embodiment 1 of the present invention with a cover removed;
Figure 4 is a plan showing the brush holding apparatus used in the automotive alternator according to Embodiment 1 of the present invention;
Figure 5 is a partially cut away front elevation showing the brush holding apparatus used in the automotive alternator according to Embodiment 1 of the present invention;
Figure 6 is a front elevation showing a brush assembly of the brush holding apparatus used in the automotive alternator according to Embodiment 1 of the present invention;
Figure 7 is a partially cut away side elevation showing the brush assembly of the brush holding apparatus used in the automotive alternator according to Embodiment 1 of the present invention before insertion;
Figure 8 is a partially cut away side elevation showing the brush assembly of the brush holding apparatus used in the automotive alternator according to Embodiment 1 of the present invention after insertion;
Figure 9 is a cross section showing a guide mounted to the brush assembly used in the automotive alternator according to Embodiment 1 of the present invention;
Figure 10 is a plan showing a cap used in the automotive alternator according to Embodiment 1 of the present invention; .
Figure 11 is a side elevation of the cap shown in Figure 10 viewed from direction A;
Figure 12 is a side elevation of the cap shown in Figure 10 viewed from direction B;
Figure 13 is a perspective showing the rear bracket of the automotive alternator according to Embodiment 1 of the present invention with the cap mounted;
Figure 14 is a perspective showing the rear bracket of the automotive alternator according to Embodiment 1 of the present invention with the cap removed;
Figure 15 is a diagram explaining a flopped-over state of the brush spring during mounting of the brush assembly;
Figure 16A is a cross section explaining a construction of a guide used in a brush assembly of an automotive alternator according to Embodiment 2 of the present invention;
Figure 16B is a front elevation explaining the construction of the guide used in the brush assembly of the automotive alternator according to Embodiment 2 of the present invention;
Figure 17A is a diagram explaining a construction of a brush assembly in an automotive alternator according to Embodiment 3 of the present invention;
Figure 17B is a diagram explaining the construction of the brush assembly in the automotive alternator according to Embodiment 3 of the present invention;
Figure 18 is a cross section showing a guide used in the brush assembly in the automotive alternator according to Embodiment 3 of the present invention;
Figure 19A is a diagram explaining a construction of a brush assembly in an automotive alternator according to Embodiment 4 of the present invention;
Figure 19B is a diagram explaining the construction of the brush assembly in the automotive alternator according to Embodiment 4 of the present invention;
Figure 20 is a cross section showing a guide used in the brush assembly in the automotive alternator according to Embodiment 4 of the present invention;
Figure 21A is a diagram explaining a construction of a brush assembly in an automotive alternator according to Embodiment 5 of the present invention;
Figure 21B is a diagram explaining the construction of the brush assembly in the automotive alternator according to Embodiment 5 of the present invention;
Figure 22 is a cross section showing a guide used in the brush assembly in the automotive alternator according to Embodiment 5 of the present invention;
Figure 23A is a diagram explaining a method for mounting a brush assembly in an automotive alternator according to Embodiment 6 of the present invention;
Figure 23B is a diagram explaining the method for mounting the brush assembly in the automotive alternator according to Embodiment 6 of the present invention;
Figure 24 is a cross section showing a guide used in the brush assembly in the automotive alternator according to Embodiment 6 of the present invention;
Figure 25A is a diagram explaining a method for mounting a brush assembly in an automotive alternator according to Embodiment 7 of the present invention;
Figure 25B is a diagram explaining the method for mounting the brush assembly in the automotive alternator according to Embodiment 7 of the present invention;
Figure 26A is a diagram explaining a method for mounting a brush assembly in an automotive alternator according to Embodiment 8 of the present invention;
Figure 26B is a diagram explaining the method for mounting the brush assembly in the automotive alternator according to Embodiment 8 of the present invention;
Figure 27 is a partial longitudinal section showing a vicinity of a brush holding apparatus of a conventional automotive alternator;
Figure 28 is a plan showing the vicinity of the brush holding apparatus of the conventional automotive alternator; and
Figure 29 is a perspective showing a brush assembly used in the conventional brush holding apparatus.

### DETAILED DESCRIPTION

Preferred embodiments of the present invention will now be explained with reference to the drawings.

### Embodiment 1

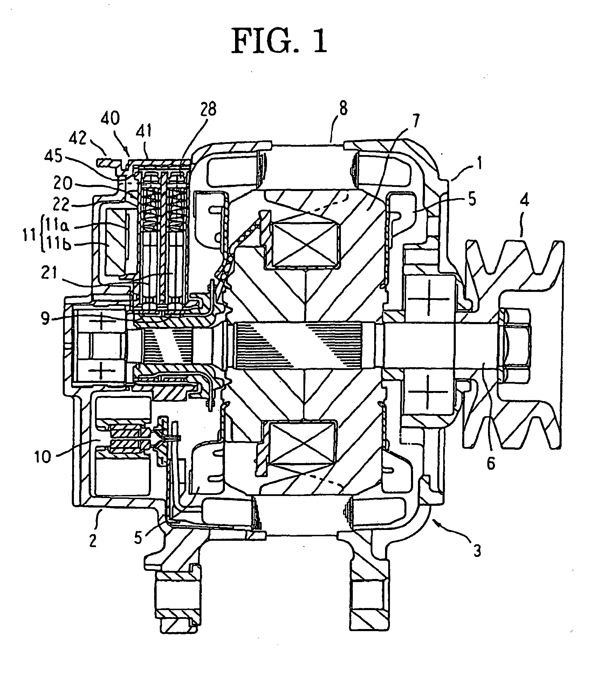

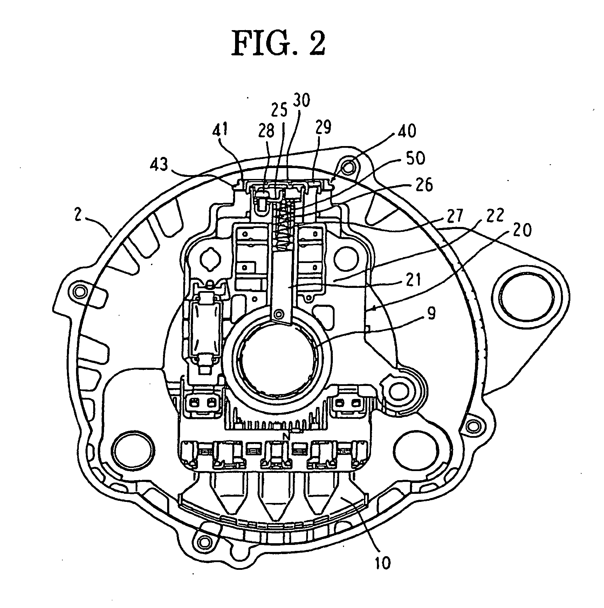

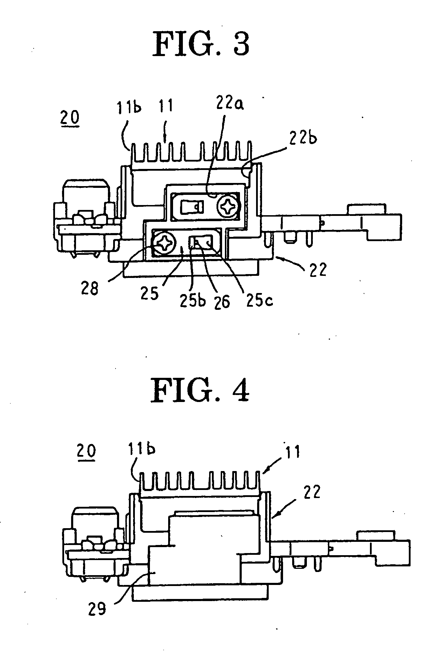

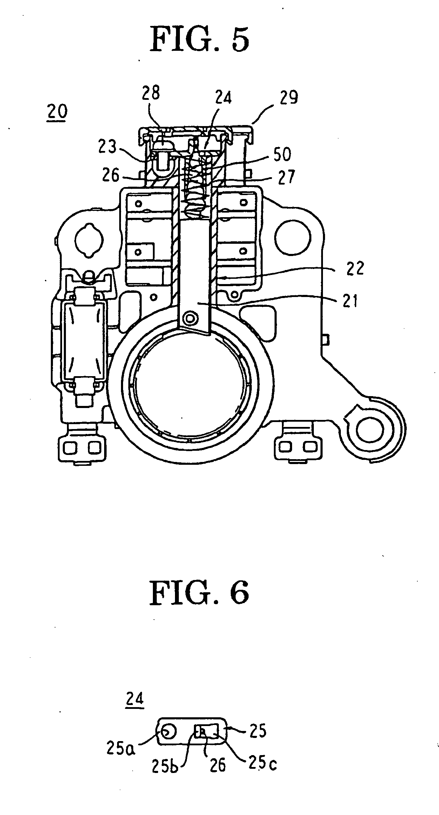

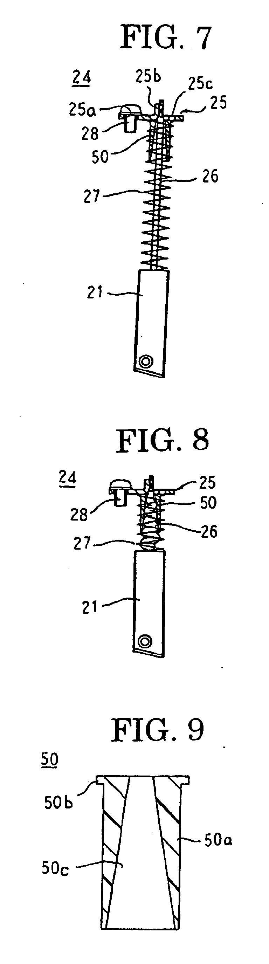

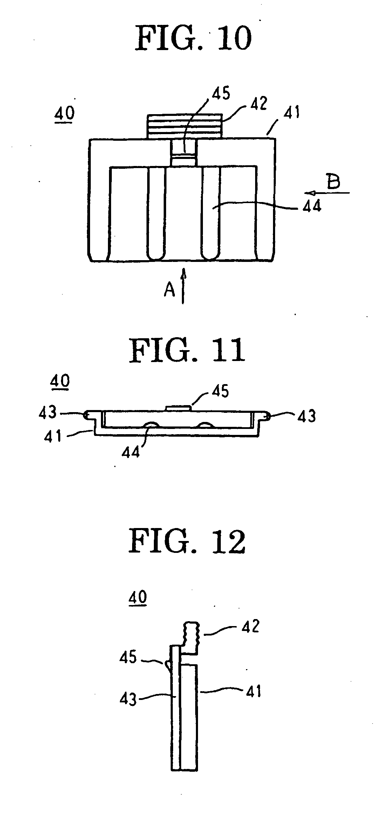

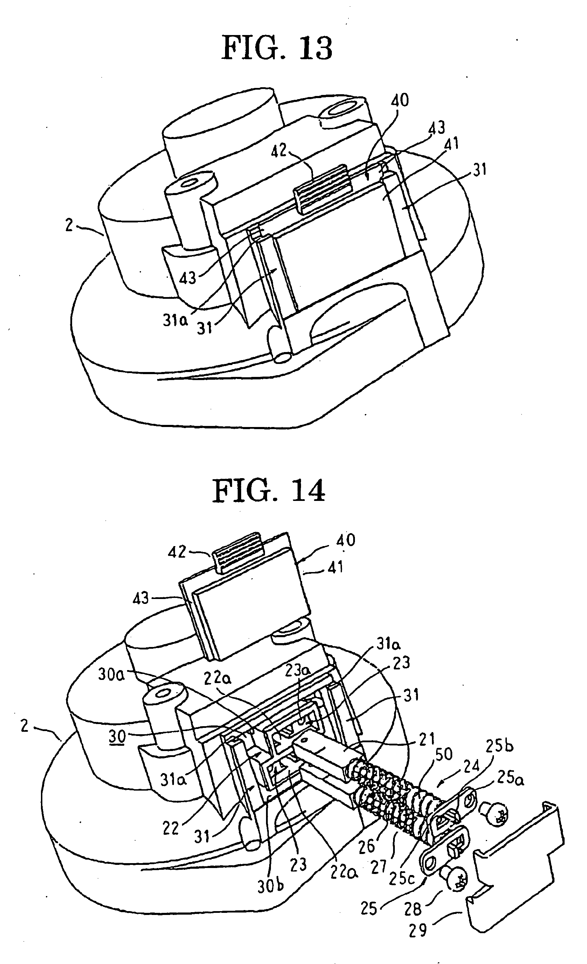

Figure 1 is a longitudinal section showing an automotive alternator according to Embodiment 1 of the present invention, Figure 2 is a partially cut away end elevation showing a rear bracket end of an interior portion of the automotive alternator according to Embodiment 1 of the present invention, Figure 3 is a plan showing a brush holding apparatus used in the automotive alternator according to Embodiment 1 of the present invention with a cover removed, Figure 4 is a plan showing the brush holding apparatus used in the automotive alternator according to Embodiment 1 of the present invention, Figure 5 is a partially cut away front elevation showing the brush holding apparatus used in the automotive alternator according to Embodiment 1 of the present invention, Figure 6 is a front elevation showing a brush assembly of the brush holding apparatus used in the automotive alternator according to Embodiment 1 of the present invention, Figure 7 is a partially cut away side elevation showing the brush assembly of the brush holding apparatus used in the automotive alternator according to Embodiment 1 of the present invention before insertion, Figure 8 is a partially cut away side elevation showing the brush assembly of the brush holding apparatus used in the automotive alternator according to Embodiment 1 of the present invention after insertion, Figure 9 is a cross section showing a guide mounted to the brush assembly used in the automotive alternator according to Embodiment 1 of the present invention, Figure 10 is a plan showing a cap used in the automotive alternator according to Embodiment 1 of the present invention, Figure 11 is a side elevation of the cap shown in Figure 10 viewed from direction A, Figure 12 is a side elevation of the cap shown in Figure 10 viewed from direction B, Figure 13 is a perspective showing the rear bracket of the automotive alternator according to Embodiment 1 of the present invention with the cap mounted, and Figure 14 is a perspective showing the rear bracket of the automotive alternator according to Embodiment 1 of the present invention with the cap removed.

In the figures, an automotive alternator includes: a case 3 constituted by a front bracket 1 and a rear bracket 2 made of aluminum, each being prepared into a general cup shape; a shaft 6 rotatably disposed inside the case 3, a pulley 4 being fixed to a first end portion of the shaft 6; a Lundell-type rotor 7 fixed to the shaft 6; a stator 8 mounted to the case 3, the stator 8 being held between the front and rear brackets 1 and 2 so as to surround the rotor 7; fans 5 respectively fixed to first and second end portions of the rotor 7; a pair of slip rings 9 fixed to a second end portion of the shaft 6 so as to be disposed side by side in an axial direction of the shaft 6 for supplying electric current to the rotor 7, a brush holding apparatus 20 in which a pair of brushes 21 sliding on a surface of each of the slip rings 9 are housed inside a brush holder 22; a rectifier 10 electrically connected to the stator 8 for converting alternating current generated in the stator 8 into direct current; and a regulator 11 fitted onto the brush holder 22, the. regulator 11 adjusting the magnitude of the alternating voltage generated in the stator 8.

The brush holder 22 is made of a resin such as a polyphenylene sulfide (PPS), etc. A pair of angular brush insertion apertures 22a are disposed side by side so as to pass through the brush holder 22, and holder terminals 23 electrically connected to a battery (not shown) constituting an electric power supply are formed integrally on the brush holder 22 so as to be exposed on opening edge portions of each of the brush insertion apertures 22a. Holder-terminal threaded apertures 23a whose aperture directions align with an aperture direction of the brush insertion apertures 22a are disposed on each of the holder terminals 23.

A brush assembly 24 is constructed such that first and second ends of a pigtail 26 are joined to a brush 21 and a brush terminal 25, a brush spring 27 formed into a coil shape being disposed under compression between the brush 21 and the brush terminal 25 so as to envelop the pigtail 26, and a guide 50 functioning as a guide member being disposed inside the brush spring 27 at an end near the brush terminal 25. The brush terminal 25 is a metal plate having a shape covering a brush insertion aperture 22a and a holder terminal 23, a fixing aperture 25a being disposed through a position corresponding to the corresponding holder-terminal threaded aperture 23a, and a cut-and-raised segment 25b functioning as a joining segment formed by cutting and raising a portion of the metal plate being formed at a position corresponding to an aperture center of the corresponding brush insertion aperture 22a. A cut aperture 25c is formed by cutting and raising the cut-and-raised segment 25b. The first end of the pigtail 26 is joined to the cut-and-raised segment 25b. The guide 50 is prepared using a nylon (trademark of E. I. du Pont de Nemours and Company), and is constituted by: a cylindrical portion 50a; and an annular flange portion 50b disposed so as to extend from an outer periphery of a first end of the cylindrical portion 50a. This cylindrical portion 50a is formed such that the wall thickness thereof increases gradually from a second end toward the first end. In other words, a penetrating aperture 50c is constructed into a shape opening outward toward the second end at a position of a central axis of the cylindrical portion 50a. The flange portion 50b is mounted so as to be held between the brush spring 27 and the brush terminal 25, being elastically supported by the force of the brush spring 27.

The brush holding apparatus 20 is constructed by mounting two brush assemblies 24 to the brush holder 22 by inserting the brushes 21 inside the brush insertion apertures 22a, aligning the cut apertures 25a of the brush terminals 25 with the threaded apertures 23a of the holder terminals 23, and securely fastening terminal screws 28 to the holder-terminal threaded apertures 23a, the terminal screws 28 being passed through the cut apertures 25a from longitudinally outside the brushes 21. Then, a cover 29 provided with a packing (not shown) on an inner wall surface is fitted into a head portion of the brush holder 22 from longitudinally outside the brushes 21, shielding the fastening portion between the holder terminals 23 and the brush terminals 25 and the brush insertion apertures 22a from the outside, thereby ensuring that the brush holding apparatus 20 is waterproof. Moreover, the terminal screws 28 are magnetized.

The brush holding apparatus 20 is mounted to the rear bracket 2 such that the pair of brushes 21 line up in an axial direction of the shaft 6 and the longitudinal direction of the brushes 21 is perpendicular to the axial direction of the shaft 6. Thus, the brushes 21 are pushed against each of the slip rings 9 by the force of the respective brush springs 27 and slide on the slip rings 9 due to the rotation of the shaft 6. Furthermore, the brush holder 22 extends in a radial direction to a vicinity of an inner wall surface of a side portion of the rear bracket 2. An opening portion 30 for brush replacement is formed in a rectangular shape in a portion of the side portion of the rear bracket 2 facing the cover 29 of the brush holding apparatus 20 longitudinally outside (radially outside) the brushes 21.

The rectifier 10 is mounted to the rear bracket 2 in a plane perpendicular to the axial direction of the shaft 6 so as to overlap the brush holding apparatus 20 in a circumferential direction. The regulator 11 is constructed by fixing a circuit board 11a mounted with electronic components to a heat sink 11b The regulator 11 is mounted by fitting the heat sink 11b onto the brush holder 22 such that the circuit board 11a is housed inside a circuit housing portion 22b of the brush holder 22. Thus, the heat sink 11b of the regulator 11 faces an inner wall surface of an end portion of the rear bracket 2.

In the opening portion 30 of the rear bracket 2, a pair of side walls 31 are formed facing each other parallel to the axial direction of the shaft 6. Grooves 31a parallel to the axial direction of the shaft 6 are formed in the facing inner wall surfaces of the pair of side walls 31. Moreover, an upper surface of a front-end wall of the opening portion 30 is positioned in a common plane with lower surfaces of the grooves 31a of the side walls 31, and an upper surface of a rear-end wall, which is positioned near the front bracket 1, is positioned in a substantially common plane with upper surfaces of the side walls 31.

The cap 40 is made of a polybutylene terephthalate (PBT) resin, and is constituted by: a main body portion 41 formed into a general box shape; a handle 42 disposed so as to extend from a first end of the main body portion 41; flange portions 43 disposed so as to extend from first and second side portions, respectively, of the main body portion 41; protruding portions 44 disposed so as to protrude from an inner wall surface of the main body portion 41; and an engaging portion 45 for preventing dislodgment disposed so as to protrude from a first end of the inner wall surface of the main body portion 41. This cap 40 is mounted to the opening portion 30 by holding the handle 42, inserting the flange portions 43 into the grooves 31a, sliding the cap 40 until a second end portion of the main body portion 41 comes into contact with a rear-end surface 30b of the opening portion 30, and then elastically engaging the engaging portion 45 in the front-end surface 30a of the opening portion 30. Thus, the opening portion 30 is covered by the cap 40. The protruding portions 44 press an upper surface of the cover 29 radially inward, compressing the packing on the cover 29.

Next, a brush replacement operation for the automotive alternator constructed in this manner will be explained.

During replacement of the brushes 21, first the elastic engagement between the engaging portion 45 and the front-end surface 30a of the opening portion 30 is released by holding the handle 42 and pulling upward in a radial direction (upward in Figure 1), then the cap 40 is pulled out by sliding it toward a front end of the opening portion 30. Next, after removing the cover 29, the terminal screws 28 are loosened and removed by inserting a screw driver through the opening portion 30, and the brush assemblies 24 are pulled out of the brush insertion apertures 22a.

Then, the brushes 21 of new brush assemblies 24 are inserted into the brush insertion apertures 22a. In this state, the pigtails 26, as shown in Figure 7, are disposed under tension between the brushes 21 and the holder terminals 25 by the force of the brush springs 27.

Next, the brush terminals 25 are placed in contact with the holder terminals 23 by pressing the brush terminals 25 radially inward. At this time, the brush springs 27 are guided by outer circumferential surfaces of the cylindrical portions 50a of the guides 50 while being compressed. Furthermore, the pigtails 26 flex with the compression of the brush springs 27, the flexed portions thereof being housed inside the penetrating apertures 50c of the guides 50 as shown in Figure 8.

Then, the brush terminals 25 are fastened to the holder terminals 23 by fastening the terminal screws 28 to the holder-terminal threaded apertures 23a, the terminal screws 28 being passed through the cut apertures 25a using a screw driver from longitudinally (radially) outside the brushes 21, and the cover 29 is fitted into the head portion of the brush holder 22. Next, the replacement of the brushes 21 is completed by inserting the cap 40 into the opening portion 30 in a similar manner.

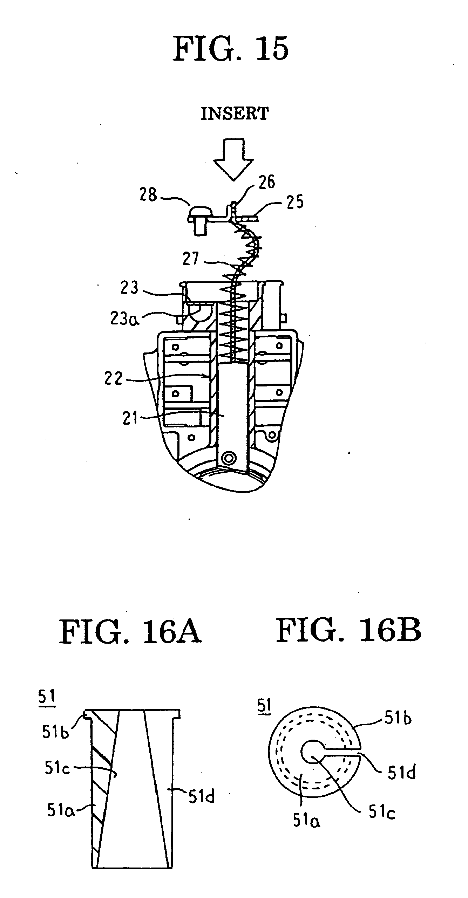

Mounting of a brush assembly when a guide 50 is not mounted will now be explained. Specifically, the brush assembly is constructed such that first and second ends of a pigtail 26 are joined to a brush 21 and a brush terminal 25, a brush spring 27 formed into a coil shape being disposed under compression between the brush 21 and the brush terminal 25 so as to envelop the pigtail 26. Thus, if the balance of pressure on the brush terminal 25 becomes uneven, as shown in Figure 15, bending of the brush spring 27, in other words, flopping over of the brush spring 27 occurs. As a result, mountability of the brush assembly is poor. In addition, there is a danger that the pigtail 26 may flex with the compression of the brush spring 27 and be pinched in the brush spring 27. When the pigtail 26 is pinched in the brush spring 27, breakage of the pigtail 26 or flopping over of the brush spring 27 may occur.

In the brush assembly 24 according to Embodiment 1, a guide 50 is disposed near the brush terminal 25 inside the brush spring 27. Thus, in the process of pressing the brush terminal 25 toward the brush 21, because the brush spring 27 is guided by the outer circumferential surface of the cylindrical portion 50a of the guide 50 while being compressed, the brush spring 27 is prevented from flopping over even if there is an imbalance in the pressure on the brush terminal 25. And when the pigtail 26 flexes with the compression of the brush springs 27, because the flexed portion thereof is housed inside the penetrating aperture 50c (the cylindrical portion 50a) of the guide 50, pinching of the pigtail 26 in the brush spring 27 is suppressed.

Consequently, the mountability of the brush-terminal 25 into the brush holder 22 is improved and the occurrence of breakage of the pigtail 26 can be prevented.

In addition, because the penetrating aperture 50c is disposed through at the position of the central axis of the cylindrical portion 50a of the guide 50 such that the inside diameter increases gradually toward the brush 21 (decreases gradually toward the brush terminal 25), the flexed portion of the pigtail 26 is conveyed into and housed inside the penetrating aperture 50c smoothly. As a result, the danger that the pigtail 26 will be pinched in the brush spring 27 during the process of compressing the brush spring 27 is significantly reduced.

Because the terminal screw 28 are magnetized, the terminal screws 28 are magnetically attracted to the screw driver during removal and replacement of the terminal screws 28, preventing the terminal screws 28 from dropping inside the case 3.

In Embodiment 1, the brush holding apparatus 20 is disposed such that the aperture directions of the brush insertion apertures 22a are aligned with a radial direction (a direction perpendicular to the axial direction of the shaft 6) and the openings of the brush insertion apertures 22a are in close proximity to the inner wall surface of the side portion of the rear bracket 2. The opening portion 30 of the rear bracket 2 is disposed in a portion of the side portion of the rear bracket 2 facing the brush insertion apertures 22a. Holder terminals 23 are formed integrally with the brush holder 22 so as to be exposed on opening edge portions of the brush insertion apertures 22a and threaded apertures 23a in which the aperture direction is a radial direction are formed in the holder terminals 23.

Thus, because the brush insertion apertures 22a and the opening portion 30 are superposed in a radial direction, and the direction of insertion and removal of the brush assemblies 24 to and from the brush insertion apertures 22a and the direction of removal and replacement of the terminal screws 28 are aligned with the radial direction, the operation of removing and replacing the brush assemblies 24 and the terminal screws 28 can be performed simply using the opening portion 30 without dismantling the case 3, enabling the operation of replacing the brushes 21 to be improved.

Because the brush holder 22 is disposed over the entire length of a radial dimension between the slip rings 9 and the opening portion 30 disposed in the rear bracket 2, the brushes 21 can be lengthened, enabling extension of the service life of the brushes 21, thereby enabling brush replacement frequency to be reduced.

Because the cap 40 is mounted slidably so as to be guided by the flange portions 43 in the grooves 31a of the side walls 31, removal and replacement of the cap 40 can be performed simply by pushing or pulling the cap 40 in one direction, improving the brush replacement operation.

When an automotive alternator is mounted to an automotive vehicle, there is clear space in the axial direction of the automotive alternator. Because the sliding direction of this cap 40 is aligned with the axial direction of the shaft 6, space for removal of the cap 40 is ensured, further improving the brush replacement operation.

Moreover, Embodiment 1 above has been explained for a case in which the flange portions 43 are slidably inserted into the grooves 31a and the cap 40 is secured to the opening portion 30 by elastically engaging the engaging portion 45 in the front-end surface 30a of the opening portion 30, but the method for inserting the cap 40 into the opening portion 30 is not limited to this. For example, the cap 40 may also be secured to the opening portion 30 by disposing protrusions on the flange portions 43, disposing recess portions in inner wall surfaces of the grooves 31a, and inserting the protrusions into the recess portions when mounting the cap 40 to the opening portion 30.

### Embodiment 2

Figures 16A and 16B are diagrams explaining a construction of a guide used in a brush assembly of an automotive alternator according to Embodiment 2 of the present invention, Figure 16A being a cross section and Figure 16B being a front elevation.

In Figures 16A and 16B, a guide 51 functioning as a guide member is prepared using a nylon (trademark of E. I. du Pont de Nemours and Company), and is constituted by: a cylindrical portion 51a and an annular flange portion 51b disposed so as to extend from an outer periphery of a first end of the cylindrical portion 51a. This cylindrical portion 51a is formed such that the wall thickness thereof increases gradually from a second end toward the first end. In other words, a penetrating aperture 51c is constructed into a shape opening outward toward the second end at a position of a central axis of the cylindrical portion 51a In addition, the cylindrical portion 51a is constructed with a C-shaped cross section by forming a slit 51d in the peripheral wall of the cylindrical portion 51a so as to extend from a first axial end to a second axial end. The guide 51, in a similar manner to the guides 50 in Embodiment 1 above, is mounted by interposing the flange portion 51b between the brush spring 27 and the brush terminal 25 so as to be elastically supported by the force of the brush spring 27.

Moreover, Embodiment 2 is constructed in a similar manner to Embodiment 1 above except for the fact that the guides 51 are used instead of the guides 50.

In Embodiment 1 above, because there is no slit in the guides 50, the brush assembly 24 is assembled by joining the first end of the pigtail 26 to the brush 21, passing the second end of the pigtail 26 through the brush spring 27 and the penetrating aperture 50b of the guide 50, and joining the second end of the pigtail 26 to the brush terminal 25 while pressing the brush spring 27 and the guide 50 toward the brush 21. Thus, it is necessary to press two parts (the brush spring 27 and the guide 50) toward the brush 21 while joining the second end of the pigtail 26 to the brush terminal 25, making assembly of the brush assembly 24 somewhat difficult.

In Embodiment 2, because the slit 51d is formed in the peripheral wall of the cylindrical portion 51a of the guide 51 so as to extend from the first axial end to the second axial end, the brush assembly can be assembled as follows:

First, the brush 21, the pigtail 26, and the brush spring 27 are integrated by joining the first end of the pigtail 26 to the brush 21, passing the second end of the pigtail 26 through the brush spring 27, and joining the second end of the pigtail 26 to the brush terminal 25. Next, a portion of the pigtail 26 is exposed by compressing the brush spring 27, and the exposed portion of the pigtail 26 is inserted into the penetrating aperture 51c through the slit 51d. Then, when the brush spring 27 is allowed to return to its original state, the flange portion 51b of the guide 51 is held between the brush spring 27 and the brush terminal 25, and the guide 51 is disposed so as to be elastically supported near the brush terminal 25 inside the brush spring 27, completing assembly of the brush assembly.

Consequently, according to Embodiment 2, retrofitting of the guides 51 becomes possible. Thus, when the second end of the pigtails 26 is being joined to the brush terminal 25, it is only necessary to compress the brush spring 27 toward the brush 21, improving assembly of the brush assemblies.

Moreover, it goes without saying that the brush assembly in Embodiment 2 can also be assembled in a similar manner to Embodiment 1 above.

### Embodiment 3

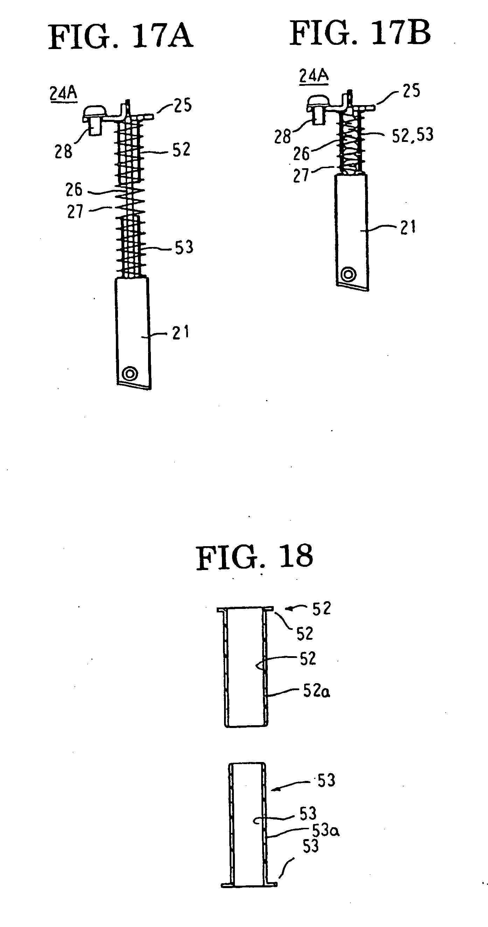

Figures 17A and 17B are diagrams explaining a construction of a brush assembly in an automotive alternator according to Embodiment 3 of the present invention, Figure 17A showing a state before the brush assembly is mounted and Figure 17B showing a mounted state of the brush assembly. Figure 18 is a cross section showing a guide used in the brush assembly in the automotive alternator according to Embodiment 3 of the present invention.

In Figure 18, a first guide 52 is prepared using a nylon (trademark of E. I. du Pont de Nemours and Company), and is constituted by: a first-guide cylindrical portion 52a; and an annular first-guide flange portion 52b disposed so as to extend from an outer periphery of a first end of the first-guide cylindrical portion 52a. This first-guide cylindrical portion 52a is formed with a uniform thickness, and a first-guide penetrating aperture 52c is constructed at a position of a central axis of the first-guide cylindrical portion 52a so as to have a uniform inside diameter. A second guide 53 is prepared using a nylon (trademark of E. I. du Pont de Nemours and Company), and is constituted by: a second-guide cylindrical portion 53a; and an annular second-guide flange portion 53b disposed so as to extend from an outer periphery of a first end of the second-guide cylindrical portion 53a. This second-guide cylindrical portion 53a is formed with a uniform thickness, and a second-guide penetrating aperture 53c is constructed at a position of a central axis of the second-guide cylindrical portion 53a so as to have a uniform inside diameter. The inside diameter of the first-guide penetrating aperture 52b is formed so as to be greater than the outside diameter of the second-guide cylindrical portion 53a. Moreover, a guide member is constituted by the first guide 52 and the second guide 53.

A brush assembly 24A, as shown in Figures 17A and 17B, is constructed such that first and second ends of a pigtail 26 are joined to a brush 21 and a brush terminal 25, a brush spring 27 formed into a coil shape being disposed under compression between the brush 21 and the brush terminal 25 so as to envelop the pigtail 26, the first guide 52 being disposed inside the brush spring 27 at an end near the brush terminal 25, and the second guide 53 being disposed inside the brush spring 27 at an end near the brush 21. The first guide 52 and the second guide 53 are elastically supported by the first-guide flange portion 52b being held between the brush spring 27 and the brush terminal 25 and the second-guide flange portion 53b being held between the brush spring 27 and brush 21.

Moreover, Embodiment 3 is constructed in a similar manner to Embodiment 1 above except for the fact that the first and second guides 52 and 53 are used instead of the single guide 50.

As shown in Figure 17A, before the brush assembly 24A is mounted to the brush holder 22, the pigtail 26 is disposed under tension between the brush 21 and the brush terminal 25 by the force of the brush spring 27, and the first and second guides 52 and 53 are disposed near the brush terminal 25 and the brush 21 inside the brush spring 27 such that end portions at opposite ends from the flange portions face each other.

When the brush assembly 24A is being mounted to the brush holder 22, the brush 21 is inserted into the brush insertion aperture 22a of the brush holder 22, and the brush terminal 25 is pressed. Thus, the brush spring 27 is guided by the cylindrical portions 52a and 53a of the first guide 52 and the second guide 53 while being compressed. The first guide 52 approaches the brush 21 with this compression of the brush spring 27 and eventually the second guide 53 is housed inside the first-guide penetrating aperture 52c. The pigtail 26, as shown in Figure 17B, flexes with the compression of the brush spring 27, the flexed portions thereof being housed inside the penetrating apertures 52c and 53c of the first and second guides 52 and 53.

Consequently, similar effects to those in Embodiment 1 above can also be achieved in Embodiment 3.

Furthermore, because first and second guides 52 and 53 having different diameters are disposed facing each other near the brush terminal 25 and the brush 21 inside the brush spring 27, the flexed portions of the pigtail 26 near the brush terminal 25 and near the brush 21 are prevented from being pinched in the brush spring 27, enabling breakage of the pigtail 26 and flopping over of the brush spring 27 to be prevented.

### Embodiment 4

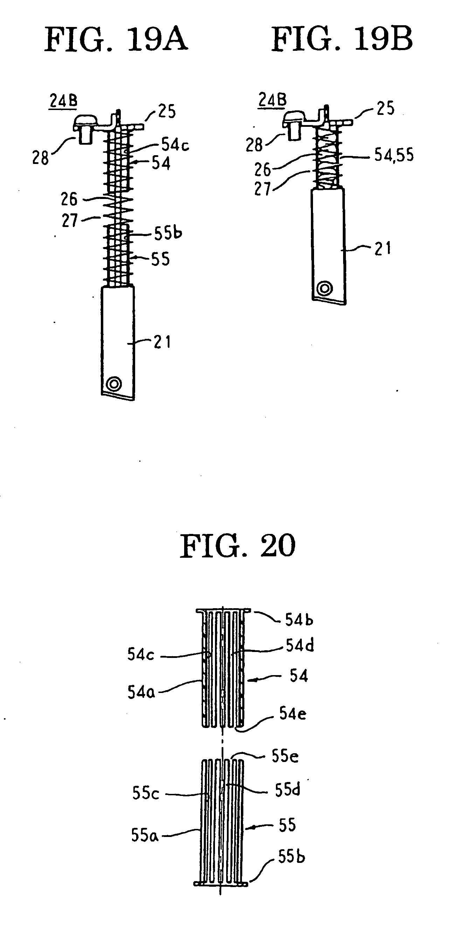

Figures 19A and 19B are diagrams explaining a construction of a brush assembly in an automotive alternator according to Embodiment 4 of the present invention, Figure 19A showing a state before the brush assembly is mounted and Figure 19B showing a mounted state of the brush assembly. Figure 20 is a cross section showing a guide used in the brush assembly in the automotive alternator according to Embodiment 4 of the present invention.

In Figure 20, a first guide 54 is prepared using a nylon (trademark of E. I. du Pont de Nemours and Company), and is constituted by: a first-guide cylindrical portion 54a; and an annular first-guide flange portion 54b disposed so as to extend from an outer periphery of a first end of the first-guide cylindrical portion 54a. This first-guide cylindrical portion 54a is formed with a uniform thickness, a first-guide penetrating aperture 54c being constructed at a position of a central axis of the first-guide cylindrical portion 54a so as to have a uniform inside diameter. In addition, first-guide slits 54d formed so as to extend from a root portion of the first-guide flange portion 54b to a second end of the first-guide cylindrical portion 54a are constructed so as to be formed at a predetermined pitch in a circumferential direction.

A second guide 55 is prepared using a nylon (trademark of E. I. du Pont de Nemours and Company), and is constituted by: a second-guide cylindrical portion 55a; and an annular second-guide flange portion 55b disposed so as to extend from an outer periphery of a first end of the second-guide cylindrical portion 55a. This second-guide cylindrical portion 55a is formed with a uniform thickness, a second-guide penetrating aperture 55c being constructed at a position of a central axis of the second-guide cylindrical portion 55a so as to have a uniform inside diameter. In addition, second-guide slits 55d formed so as to extend from a root portion of the second-guide flange portion 55b to a second end of the second-guide cylindrical portion 55a are constructed so as to be formed at a predetermined pitch in a circumferential direction.

The first guide 54 and the second guide 55 are formed into an identical shape. A width of the first-guide and second-guide slits 54d and 55d is formed so as to be larger than a width of first-guide and second-guide tongue pieces 54e and 55e defined by the first-guide and second-guide slits 54d and 55d. Moreover, a guide member is constituted by the first guide 54 and the second guide 55.

A brush assembly 24B, as shown in Figures 19A and 19B, is constructed such that first and second ends of a pigtail 26 are joined to a brush 21 and a brush terminal 25, a brush spring 27 formed into a coil shape being disposed under compression between the brush 21 and the brush terminal 25 so as to envelop the pigtail 26, the first guide 54 being disposed inside the brush spring 27 at an end near the brush terminal 25, and the second guide 55 being disposed inside the brush spring 27 at an end near the brush 21. The first guide 54 and the second guide 55 are elastically supported by the first-guide flange portion 54b being held between the brush spring 27 and the brush terminal 25 and the second-guide flange portion 55b being held between the brush spring 27 and brush 21.

Moreover, Embodiment 4 is constructed in a similar manner to Embodiment 3 above except for the fact that the first and second guides 54 and 55 are used instead of the first and second guides 52 and 53.

As shown in Figure 19A, before the brush assembly 24B is mounted in the brush holder 22, the pigtail 26 is disposed under tension between the brush 21 and the brush terminal 25 by the force of the brush spring 27, and the first and second guides 54 and 55 are disposed near the brush terminal 25 and the brush 21 inside the brush spring 27 such that end portions at opposite ends from the flange portions face each other. Moreover, the first and second guides 54 and 55 are disposed so as to be offset from each other by a predetermined pitch in a circumferential direction, such that the first-guide and second-guide slits 54d and 55d and the second-guide and first-guide tongue pieces 55e and 54e face each other.

When the brush assembly 24B is being mounted to the brush holder 22, the brush 21 is inserted into the brush insertion aperture 22a of the brush holder 22, and the brush terminal 25 is pressed. Thus, the brush spring 27 is guided by the cylindrical portions 54a and 55a of the first guide 54 and the second guide 55 while being compressed. At the same time, the first guide 54 approaches the brush 21 with this compression of the brush spring 27, the first-guide tongue pieces 54e entering the second-guide slits 55d, and the second-guide tongue pieces 55e entering the first-guide slits 54d. The pigtail 26, as shown in Figure 19B, flexes with the compression of the brush spring 27, the flexed portions thereof being housed inside the penetrating apertures 54c and 55c of the first and second guides 54 and 55.

Consequently, similar effects to those in Embodiment 3 above can also be achieved in Embodiment 4.

Because the first guide 54 and the second guide 55 are formed into an identical shape, the internal volume of the penetrating apertures 54c and 55c of the first and second guides 54 and 55 can be increased, facilitating housing of the flexed portions of the pigtail 26.

### Embodiment 5

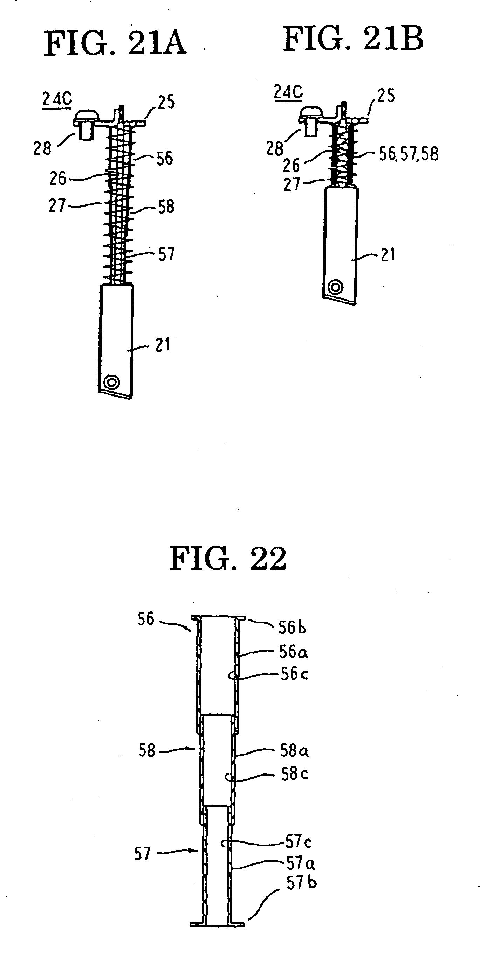

Figures 21A and 21B are diagrams explaining a construction of a brush assembly in an automotive alternator according to Embodiment 5 of the present invention, Figure 21A showing a state before the brush assembly is mounted and Figure 21B showing a mounted state of the brush assembly. Figure 22 is a cross section showing a guide used in the brush assembly in the automotive alternator according to Embodiment 5 of the present invention.

In Figure 22, a first guide 56 is prepared using a nylon (trademark of E. I. du Pont de Nemours and Company), and is constituted by: a first-guide cylindrical portion 56a having a shape tapering down toward a second end; and an annular first-guide flange portion 56b disposed so as to extend from an outer periphery of a first end of the first-guide cylindrical portion 56a. This first-guide cylindrical portion 56a is formed with a uniform thickness, a first-guide penetrating aperture 56c being constructed at a position of a central axis of the first-guide cylindrical portion 56a such that an inside diameter thereof gradually reduces toward the second end.

A second guide 57 is prepared using a nylon (trademark of E. I. du Pont de Nemours and Company), and is constituted by: a second-guide cylindrical portion 57a having a shape tapering down toward a second end; and an annular second-guide flange portion 57b disposed so as to extend from an outer periphery of the second end of the second-guide cylindrical portion 57a. This second-guide cylindrical portion 57a is formed with a uniform thickness, a second-guide penetrating aperture 57c being constructed at a position of a central axis of the second-guide cylindrical portion 57a such that an inside diameter thereof gradually reduces toward the second end.

An intermediate guide 58 is prepared using a nylon (trademark of E. I. du Pont de Nemours and Company), and is constructed with an intermediate-guide cylindrical portion 58a having a shape tapering down toward a second end. This intermediate-guide cylindrical portion 58a is formed with a uniform thickness, an intermediate-guide penetrating aperture 58c being constructed at a position of a central axis of the intermediate-guide cylindrical portion 58a such that an inside diameter thereof gradually reduces toward the second end.

Here, the inside diameter of the second end of the first-guide penetrating aperture 56c is greater than an outside diameter of the first end of the intermediate-guide cylindrical portion 58a, and the inside diameter of the second end of the intermediate-guide penetrating aperture 58c is greater than an outside diameter of the first end of the second-guide cylindrical portion 57a. The first guide 56, the intermediate guide 58, and the second guide 57 are assembled such that the intermediate guide 58 is housed inside the first guide 56, and the second guide 57 is housed inside the intermediate guide 58. Thus, the intermediate guide 58 is installed in the first guide 56 telescopically, and the second guide 57 is installed in the intermediate guide 58 telescopically, making the entire construction expandable and compressible. Moreover, a guide member is constituted by the first guide 56, the intermediate guide 58, and the second guide 57.

A brush assembly 24C, as shown in Figures 21A and 21B, is constructed such that first and second ends of a pigtail 26 are joined to a brush 21 and a brush terminal 25, a brush spring 27 formed into a coil shape being disposed under compression between the brush 21 and the brush terminal 25 so as to envelop the pigtail 26, the first guide 56 being disposed inside the brush spring 27 at an end near the brush terminal 25, the second guide 57 being disposed inside the brush spring 27 at an end near the brush 21, and the intermediate guide 58 being disposed such that the first end thereof is housed inside the penetrating aperture 56c of the first guide 56 and the second end envelops the first end of the cylindrical portion 57a of the second guide 57. The first guide 56 and the second guide 57 are elastically supported by the first-guide flange portion 56b being held between the brush spring 27 and the brush terminal 25 and the second-guide flange portion 57b being held between the brush spring 27 and brush 21.

Moreover, Embodiment 5 is constructed in a similar manner to Embodiment 3 above except for the fact that the first, second, and intermediate guides 56, 57, and 58 are used instead of the first and second guides 52 and 53.

As shown in Figure 21A, before a brush assembly 24C is mounted in the brush holder 22, the pigtail 26 is disposed under tension between the brush 21 and the brush terminal 25 by the force of the brush spring 27, the first and second guides 56 and 57 are disposed near the brush terminal 25 and the brush 21 inside the brush spring 27 such that end portions at opposite ends from the flange portions face each other, the intermediate guide 58 is disposed so as to link the first and second guides 56 and 57.

When the brush assembly 24C is being mounted to the brush holder 22, the brush 21 is inserted into the brush insertion aperture 22a of the brush holder 22, and the brush terminal 25 is pressed. Thus, the brush spring 27 is guided by the cylindrical portions 56a, 58a, and 57a of the first guide 56, the intermediate guide 58, and the second guide 57 while being compressed. The first guide 56 approaches the brush 21 with this compression of the brush spring 27, while the intermediate guide 58 is progressively housed inside the first-guide penetrating aperture 56c, and the second guide 57 is progressively housed inside the penetrating aperture 58c of the intermediate guide 58. The pigtail 26, as shown in Figure 21B, flexes with the compression of the brush spring 27, the flexed portions thereof being housed inside the penetrating apertures 56c, 58c, and 57c of the first, intermediate, and second guides 56, 58, and 57.

Consequently, similar effects to those in Embodiment 3 above can also be achieved in Embodiment 5.

Furthermore, because the first, intermediate, and second guides 56, 58, and 57 are disposed so as to envelop the entire length of the pigtail 26 disposed under tension between the brush 21 and the brush terminal 25, the flexed portion of the pigtail 26 is reliably housed inside the cylindrical portions 56c, 58c, and 57c, enabling pinching of the pigtail 26 in the brush spring 27 to be reliably prevented.

Moreover, in Embodiment 5 above, the cylindrical portions 56a, 58a, and 57a of the first, intermediate, and second guides 56, 58, and 57 are each formed so as to have a shape tapering down toward the second end, but the cylindrical portions 56a, 58a, and 57a may also be formed into cylindrical shapes each having a uniform diameter. In that case, the diameters of the cylindrical portions 56a, 58a, and 57a should be reduced in order of the first-guide, intermediate-guide, and second-guide cylindrical portions 56a, 58a, and 57a, an engaging protrusion should be disposed so as to project from an inner wall surface at the second end of the first-guide cylindrical portion 56a, an engaged protrusion should be disposed so as to project from an outer wall surface at the first end of the intermediate-guide cylindrical portion 58a, an engaging protrusion should be disposed so as to project from an inner wall surface at the second end of the intermediate-guide cylindrical portion 58a, and an engaged protrusion should be disposed so as to project from an outer wall surface at the first end of the second-guide cylindrical portion 57a. Thus, the intermediate-guide cylindrical portion 58a is prevented from coming out of the first-guide cylindrical portion 56a, and the second-guide cylindrical portion 57a is prevented from coming out of the intermediate-guide cylindrical portion 58a during expansion by engagement between the engaging protrusions and the engaged protrusions, ensuring the expansion and compression of a guide member constituted by the first-guide, intermediate-guide, and second-guide cylindrical portions 56a, 58a, and 57a linked so as to be arranged in descending order of diameter.

### Embodiment 6

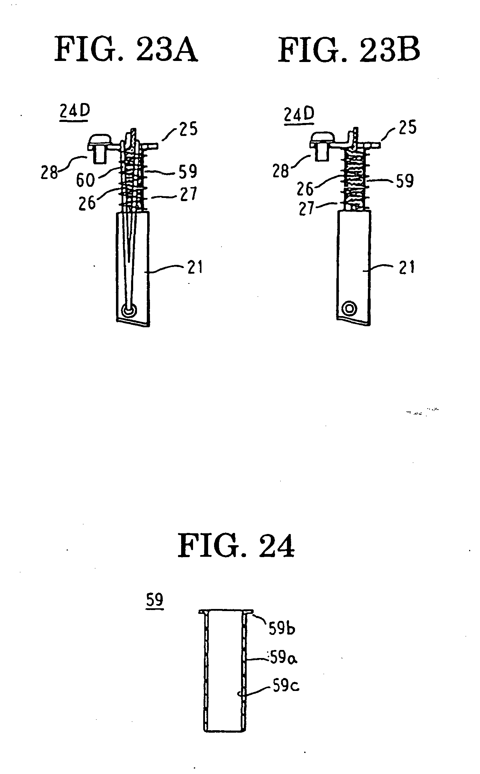

Figures 23A and 23B are diagrams explaining a method for mounting a brush assembly in an automotive alternator according to Embodiment 6 of the present invention, Figure 23A showing a state before the brush assembly is mounted and Figure 23B showing a mounted state of the brush assembly. Figure 24 is a cross section showing a guide used in the brush assembly in the automotive alternator according to Embodiment 6 of the present invention.

In Figure 24, a guide 59 functioning as a guide member is prepared using a nylon (trademark of E. I. du Pont de Nemours and Company), and is constituted by: a cylindrical portion 59a; and an annular flange portion 59b disposed so as to extend from an outer periphery of a first end of the cylindrical portion 59a. This cylindrical portion 59a is formed with a uniform thickness, and a penetrating aperture 59c is constructed at a position of a central axis of the cylindrical portion 59a so as to have a uniform inside diameter.

A brush assembly 24D is constructed such that first and second ends of a pigtail 26 are joined to a brush 21 and a brush terminal 25, a brush spring 27 formed into a coil shape being disposed under compression between the brush 21 and the brush terminal 25 so as to envelop the pigtail 26, and the guide 51 being disposed inside the brush spring 27 at an end near the brush terminal 25. The flange portion 59b is mounted so as to be held between the brush spring 27 and the brush terminal 25, the guide 51 being elastically supported.

Here, the guide 59 is formed so as to have a length that is shorter than the distance between the brush 21 and the brush terminal 25 in a state in which a brush assembly 24D holding an unused brush 21 is installed in the brush holder 22.

In Embodiment 6, as shown in Figure 23A, before inserting the brush assembly 24D into the brush insertion aperture 22a, the brush 21 and the brush terminal 25 are fastened by a tie 60 with the brush spring 27 in a compressed state such that the brush 21 is placed in contact with the second end of the guide 59. Thus, the brush spring 27 is maintained in a compressed state equal to the length of the guide 59, the flexed portion of the pigtail 26 being housed inside the penetrating aperture 59c of the guide 59.

The brush 21 of the brush assembly 24D fastened by the tie 60 is inserted into the brush insertion aperture 22a. At this time, because the length from the leading end of the brush 21 to the brush terminal 25 is shorter than the aperture depth of the brush insertion aperture 22a, the brush terminal 25 is mounted to the holder terminal 23 without the leading end of the brush 21 contacting the slip ring 9. Then, the cut aperture 25a of the brush terminal 25 is aligned with the holder-terminal threaded aperture 23a of the holder terminal 23, and the terminal screw 28 is fastened to the holder-terminal threaded aperture 23a. Thereafter, the compressed state of the brush spring 27 is released by releasing the tie 60, and the tie 60 is pulled out. Thus, the brush spring 27 returns to its original state as shown in Figure 23B, the brush 21 being placed in contact with the slip ring 9 by the restoring force of the brush spring 27, thereby completing installation of the brush assembly 24D in the brush holder 22.

According to Embodiment 6, before inserting the brush assembly 24D into the brush insertion aperture 22a, the brush spring 27 is compressed by pressing the brush assembly 24D from first and second longitudinal ends thereof such that the brush 21 and the brush terminal 25 approach each other, and the brush 21 and the brush terminal 25 are fastened by a tie 60 while maintaining the compressed state of the brush spring 27. Thus, the brush spring 27 can be compressed in a large workspace, and the brush spring 27 is guided by the cylindrical portion 59a of the guide 59 and compressed smoothly, enabling flopping over of the brush spring 27 and pinching of the pigtail 26 in the brush spring 27 to be prevented.

The brush 21 and the brush terminal 25 are fastened by the tie 60 with the brush spring 27 in a compressed state before inserting the brush assembly 24D into the brush insertion aperture 22a. Thus, flopping over of the brush spring 27 and pinching of the pigtail 26 in the brush spring 27 resulting from the process of compressing the brush spring 27 with the brush 21 of the brush assembly in which the pigtail 26 is disposed under tension inserted into the brush insertion aperture 22a are eliminated. Because the brush 21, the brush terminal 25, and the brush spring 27 are integrated by fastening with the tie 60, insertion of the brush 21 into the brush insertion aperture 22a and fastening with the terminal screw 28 can easily be achieved. Thus, the mounting workability of the brush assembly 24D is improved significantly.

Moreover, in Embodiment 6, a method for mounting the brush assembly 24D has been explained, but it goes without saying that this mounting method may be also be applied to the brush assemblies according to Embodiments 1 to 5 above.

### Embodiment 7

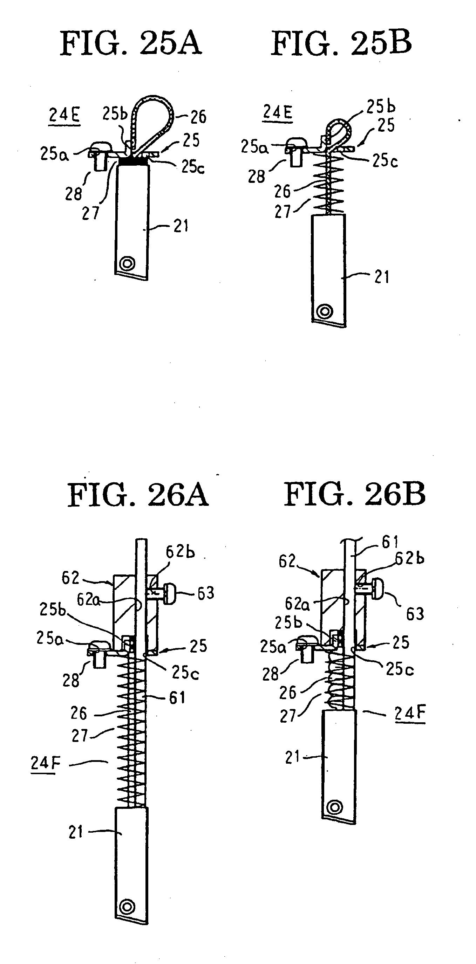

Figures 25A and 25B are diagrams explaining a method for mounting a brush assembly in an automotive alternator according to Embodiment 7 of the present invention, Figure 25A showing a state before the brush assembly is mounted and Figure 25B showing a mounted state of the brush assembly.

In Figures 25A and 25B, a brush assembly 24E is constructed such that the first end of the pigtail 26 is led out through the cut aperture 25c, then returned so as to be redirected toward the brush 21 and joined to the cut-and-raised segment 25b, and the second end thereof is joined to the brush 21, the brush spring 27 formed into a coil shape being disposed under compression between the brush 21 and the brush terminal 25 so as to envelop the pigtail 26.

In Embodiment 7, as shown in Figure 25A, before inserting the brush assembly 24E into the brush insertion aperture 22a, the brush spring 27 is compressed by pulling a first end portion of the pigtail 26 out through the cut aperture 25c of the brush terminal 25. At this time, the brush spring 27 is compressed to a length such that the brush terminal 25 will be mounted to the holder terminal 23 without the leading end of the brush 21 contacting the slip ring 9 when the brush 21 of the brush assembly 24E is inserted into the brush insertion aperture 22a.

Then, the brush 21 of the brush assembly 24E is inserted into the brush insertion aperture 22a with the brush spring 27 in a compressed state, and the brush terminal 25 is mounted to the holder terminal 23. Then, the cut aperture 25a of the brush terminal 25 is aligned with the holder-terminal threaded aperture 23a of the holder terminal 23, and the terminal screw 28 is fastened to the holder-terminal threaded aperture 23a. Thereafter, the tension on the pigtail 26 is released. Thus, the brush spring 27 returns to its original state as shown in Figure 25B, the pigtail 26 being pulled inside the brush spring 27 through the cut aperture 25c and the brush 21 being placed in contact with the slip ring 9 by the restoring force of the brush spring 27, thereby completing installation of the brush assembly 24E in the brush holder 22.

According to Embodiment 7, because the brush spring 27 is compressed by pulling the first end portion of the pigtail 26 out through the cut aperture 25c of the brush terminal 25 before inserting the brush assembly 24E into the brush insertion aperture 22a, pinching of the pigtail 26 in the brush spring 27 is reliably prevented.

Because the brush 21 of the brush assembly 24E is inserted into the brush insertion aperture 22a with the brush spring 27 in a compressed state, flopping over of the brush spring 27 and pinching of the pigtail 26 in the brush spring 27 resulting from the process of compressing the brush spring 27 with the brush 21 of the brush assembly in which the pigtail 26 is disposed under tension inserted into the brush insertion aperture 22a are eliminated, and insertion of the brush 21 into the brush insertion aperture 22a and fastening with the terminal screw 28 can easily be achieved, whereby the mounting workability of the brush assembly 24E is improved significantly.

Because the first end of the pigtail 26 is led out through the cut aperture 25c, then returned so as to be redirected toward the brush 21 and joined to the cut-and-raised segment 25b, when the brush assembly 24E is mounted to the brush holder 22, the second end of the pigtail 26 projects outside the brush terminal 25, as shown in Figure 25B, due to the rigidity of the pigtail 26. Thus, because the flexed portion of the pigtail 26 projects from the brush terminal 25, pinching of the pigtail 26 in the brush spring 27 is prevented.

Because the first end of the pigtail 26 is directed toward the brush 21 and joined to the cut-and-raised segment 25b, the pigtail 26 can be pulled out through the cut aperture 25c of the brush terminal 25 easily.

Moreover, in Embodiment 7, a method for mounting the brush assembly 24E has been explained, but it goes without saying that this mounting method may be also be applied to the brush assemblies according to Embodiments 1 to 6 above.

### Embodiment 8

Figures 26A and 26B are diagrams explaining a method for mounting a brush assembly in an automotive alternator according to Embodiment 8 of the present invention, Figure 26A showing a state before pressing a brush spring in the brush assembly and Figure 26B showing a mounted state of the brush assembly.

In Figures 26A and 26B, a pipe 61 functioning as a guide member has a diameter which can be inserted through the cut aperture 25c of the brush terminal 25 and guides the compression of the brush spring 27. A push-in jig 62 is a metal block, a jig penetrating aperture 62a through which the pipe 61 is inserted being disposed therethrough, and a jig threaded aperture 62b being formed so as to communicate between the jig penetrating aperture 62a and an external portion. A brush assembly 24F is constructed such that the first end of the pigtail 26 is directed away from the brush 21 and joined to the cut-and-raised segment 25b, and the second end thereof is joined to the brush 21, the brush spring 27 formed into a coil shape being disposed under compression between the brush 21 and the brush terminal 25 so as to envelop the pigtail 26.

In Embodiment 8, as shown in Figure 26A, the pipe 61 is inserted into the brush spring 27 through the cut aperture 25c with the brush 21 of the brush assembly 24F inserted into the brush insertion aperture 22a. Then, the push-in jig 62 is mounted by passing a projecting portion of the pipe 61 projecting out of the brush terminal 25 through the jig penetrating aperture 62a. Next, the brush terminal 25 is placed in contact with the holder terminal 23 by placing the push-in jig 62 against the brush terminal 25 and pressing toward the brush 21 using the pipe 61 as a guide. Thus, the brush spring 27 is compressed using the pipe 61 as a guide.

Then, as shown in Figure 26B, the pipe 61 is fixed by fastening a fastening screw 63 engaged in the threaded aperture 62b of the push-in jig 62. Next, the terminal screw 28 is passed through the cut aperture 25b and fastened to the holder-terminal threaded aperture 23a. Thereafter, the push-in jig 62 is pulled out together with the pipe 61, thereby completing installation of the brush assembly 24F in the brush holder 22.

According to Embodiment 8, because the pipe 61 is inserted into the brush spring 27 through the cut aperture 25c of the brush terminal 25 before pressing the brush terminal 25 of the brush assembly 24F toward the brush 21, the brush spring 27 is guided by the pipe 61 in the process of pressing the brush terminal 25 toward the brush 21 and compressed smoothly, reliably preventing the brush spring 27 from flopping over.

Moreover, in each of the above embodiments, each of the guides is prepared using a nylon, but it is only necessary for the guide to serve the functions of guiding the compression of the brush spring 27 and enabling the flexed portion of the pigtail 26 to be housed, and another resin may also be used, or a metal material may also be used.

In each of the above embodiments, an automotive alternator has been explained, but the present invention also exhibits similar effects if applied to a dynamoelectric machine such as an alternating-current electric motor, an alternating-current electric motor-generator, etc.

## Claims

1. A dynamoelectric machine comprising:
a case (3);
a shaft (6), first and second ends of said shaft (6) being rotatably supported in said case (3);
a rotor (7) fixed to said shaft and rotatably disposed inside said case;
a slip ring (9) fixed to said shaft;
a stator (8) fixed to said case so as to surround said rotor;
a brush holder (22) through which a brush insertion aperture (22a) is disposed, a holder terminal (23) being disposed on an opening edge portion of said brush insertion aperture, and a cover (29) being mounted to a head portion of said brush holder (22), said brush holder being disposed inside said case such that an aperture direction of said brush insertion aperture is perpendicular to an axial direction of said shaft;
a brush assembly (24,24A,24B,24C,24D,24E) mounted to said brush holder (22);
an opening portion (30) formed in a portion of said case facing said cover (29); and
a cap (40) for covering said opening portion (30),
wherein said brush assembly is constructed such that a brush (21) and a brush terminal (25) are linked by means of a pigtail (26), and a brush spring (27) is disposed under compression between said brush and said brush terminal,
wherein said brush (21) is housed inside said brush insertion aperture (22a), said brush terminal (25) is fixed to said holder terminal (23), and said brush (21) is placed in contact with said slip ring (9) by a force from said brush spring (27), and
**characterised in that** a guide member (50,51,52,53,54,55, 56,57,58,59) for guiding expansion and compression of said brush spring is disposed inside said brush spring.

2. The dynamoelectric machine according to Claim 1, wherein said guide member is provided with a cylindrical first guide (51,52,54,56) disposed such that said pigtail (26) passes through an interior portion and a first end thereof contacts said brush terminal (25).

3. The dynamoelectric machine according to Claim 2, wherein said first guide (51) is formed such that an inside diameter increases gradually from the first end toward a second end.

4. The dynamoelectric machine according to Claim 2, wherein said first guide (51) is constructed with a C-shaped cross section in which a slit (51d) is formed so as to extend from the first end to a second end.

5. The dynamoelectric machine according to Claim 2, wherein said guide member is provided with a second guide (53,55) disposed such that said pigtail (26) passes through an interior portion and a first end thereof contacts said brush (21).

6. The dynamoelectric machine according to Claim 5, wherein said first and second guides (54,55) are each formed with a plurality of slits (54d,55d) in a circumferential direction, each slit (54d,55d) being formed so as to extend from a first end portion to a second end, said first and second guides (54,55) being disposed such that with said brush spring (27) in a compressed state tongue pieces (55e) formed between said slits (55d) of said second guide (55) are inserted into said slits (54d) of said first guide (54), and tongue pieces (54e) formed between said slits (54d) of said first guide (54) are inserted into said slits (55d) of said second guide (55).

7. The dynamoelectric machine according to Claim 1, wherein said guide member is constructed such that a plurality of guides (56,57,58) each having a different diameter are arranged and linked expandably and compressibly in descending order of diameter, said plurality of guides being disposed between said brush terminal (25) and said brush (21) such that first guide (56) having a largest diameter contacts either of said brush terminal (25) and said brush (21), and second guide (57) having a smallest diameter contacts the other of said brush terminal (25) and said brush (21).

8. A method for mounting to a brush holder mounted to a dynamoelectric machine a brush assembly (24D,24E) in which a brush spring (27) is disposed under compression between a brush (21) and a brush terminal (25), and a pigtail (26) is disposed under tension between said brush (21) and said brush terminal (25) by a force from said brush spring (27), said method comprising the steps of:
providing a guide member inside said brush spring for guiding expansion and compression of said brush spring;
inserting said brush (21) into a brush insertion aperture (22a) of said brush holder (22),
placing said brush spring (27) in a compressed state having a predetermined length by shortening a distance between said brush (21) and said brush terminal (25) using said guide member (61) as a guide,
placing said brush terminal (25) in contact with a holder terminal (23) of said brush holder (22),
fixing said brush terminal (25) to a holder terminal (23) of said brush holder (22).

9. The method of Claim 8, in which:
the brush spring is placed into the compressed state prior to insertion of the brush into the brush insertion aperture;
the brush is inserted into the brush insertion aperture while maintaining said brush spring (27) in said compressed state having a predetermined length; and
subsequent to insertion of the brush spring into the brush insertion aperture, said brush spring (27) is released from said compressed state having a predetermined length.

10. The method according to Claim 9, wherein said brush terminal (25) has a cut aperture (25c) and a joining segment (25b) standing on an edge portion of said cut aperture, a first end of said pigtail (26) being passed through said cut aperture (25c) from a side near said brush (21), returned, directed toward said brush, and joined to said joining segment (25b), and said brush spring (27) being placed in said compressed state having a predetermined length by pulling a first end portion of said pigtail (26) out through said cut aperture (25c) of said brush terminal (25).

11. The method according to Claim 8, wherein the step of providing the guide member includes the step of
inserting a guide member (61) between said pigtail (26) and said brush spring (27) of said brush assembly (24F) with said pigtail disposed under tension.

## Patentansprüche

1. Dynamoelektrische Maschine mit:
einem Gehäuse (3);
einer Achse (6), wobei ein erstes und ein zweites Ende der Achse (6) drehbar in dem Gehäuse (3) gehalten sind;
einem Rotor (7), der an der Achse befestigt ist und drehbar innerhalb des Gehäuses angeordnet ist;
einem Gleitring (9), der an der Achse befestigt ist;
einem Stator (8), der derart an dem Gehäuse befestigt ist, dass er den Rotor umgibt;
einem Bürstenhalter (22) durch den eine Bürsteneinbringöffnung (22a) angeordnet ist, wobei ein Halteranschluss (23) an einem Öffnungskantenabschnitt der Bürsteneinbringöffnung angeordnet ist, und eine Abdeckung (29) an einem Kopfabschnitt des Bürstenhalters (22) angebracht ist, wobei der Bürstenhalter so innerhalb des Gehäuses angeordnet ist, dass eine Öffnungsrichtung der Bürsteneinbringöffnung senkrecht zu einer axialen Richtung der Achse ist;
einer Bürstenanordnung (24, 24A, 24B, 24C, 24D, 24E), die an dem Bürstenhalter (22) angebracht ist;
einem Öffnungsabschnitt (30), der in einem Abschnitt des Gehäuses, welcher der Abdeckung (29) zugewandt ist, ausgebildet ist; und
einer Kappe (40) zum Abdecken des Öffnungsabschnitts (30),
wobei die Bürstenanordnung so aufgebaut ist, dass eine Bürste (21) und ein Bürstenanschluss (25) mittels eines Anschlusskabels (26) verbunden sind, und eine Bürstenfeder (27) unter Druck zwischen der Bürste und dem Bürstenanschluss angeordnet ist,
wobei die Bürste (21) innerhalb der Bürsteneinbringöffnung (22a) aufgenommen ist, der Bürstenanschluss (25) an dem Halteranschluss (23) befestigt ist, und die Bürste (21) durch eine Kraft von der Bürstenfeder (27) in Kontakt stehend mit dem Gleitring (9) angeordnet ist, und
**dadurch gekennzeichnet dass** ein Führungselement (50, 51, 52, 53, 54, 55, 56, 57, 58, 59) zum Führen von Expansion und Kompression der Bürstenfeder, innerhalb der Bürstenfeder angeordnet ist.

2. Dynamoelektrische Maschine gemäß Anspruch 1, bei der das Führungselement mit einer zylindrischen ersten Führung (51, 52, 54, 56) versehen ist, die so angeordnet ist, dass das Anschlusskabel (26) durch einen inneren Abschnitt tritt und ein erstes Ende derselben und mit dem Bürstenanschluss (25) in Kontakt steht.

3. Dynamoelektrische Maschine gemäß Anspruch 2, bei der die erste Führung (51) so ausgebildet ist, dass ein Innendurchmesser allmählich von dem ersten Ende zu einem zweiten Ende hin zunimmt.

4. Dynamoelektrische Maschine gemäß Anspruch 2, bei der die erste Führung (51) mit einem C-förmigen Querschnitt aufgebaut ist, in dem ein Schlitz (51d) derart gebildet ist, dass er sich von dem ersten Ende zu einem zweiten Ende hin erstreckt.

5. Dynamoelektrische Maschine gemäß Anspruch 2, bei der das Führungselement mit einer zweiten Führung (53, 55) vorgesehen ist, die so angeordnet ist, dass das Anschlusskabel (26) durch einen inneren Abschnitt tritt und ein erstes Ende derselben mit der Bürste (21) in Kontakt steht.

6. Dynamoelektrische Maschine gemäß Anspruch 5, bei der die erste und die zweite Führung (54, 55) jeweils mit mehreren Schlitzen (54d, 55d) in einer umfänglichen Richtung ausgebildet sind, wobei jeder Schlitz (54d, 55d) derart ausgebildet ist, dass er sich von einem ersten Endabschnitt zu einem zweiten Ende erstreckt, die erste und die zweite Führung (54, 55) so angeordnet sind, dass bei zusammengedrückter Bürstenfeder (27) Zungenstücke (55e), die zwischen den Schlitzen (55d) der zweiten Führung (55) ausgebildet sind, in die Schlitze (54d) der ersten Führung (54) eingebracht sind, und Zungenstücke (54e), die zwischen den Schlitzen (54d) der ersten Führung (54) gebildet sind, in die Schlitze (55d) der zweiten Führung (55) eingebracht sind.

7. Dynamoelektrische Maschine gemäß Anspruch 1, bei der das Führungselement so aufgebaut ist, dass mehrere Führungen (56, 57, 58), die jeweils einen unterschiedlichen Durchmesser aufweisen, in absteigender Reihenfolge des Durchmessers angeordnet, und dehnbar und zusammendrückbar verbunden sind, wobei die mehreren Führungen so zwischen dem Bürstenanschluss (25) und der Bürste (21) angeordnet sind, dass die erste Führung (56), die den größten Durchmesser aufweist, entweder mit dem Bürstenanschluss (25) oder der Bürste (21) in Kontakt steht, und die zweite Führung (57), die den kleinsten Durchmesser aufweist, mit dem verbleibenden aus Bürstenanschluss (25) oder der Bürste (21) in Kontakt steht.

8. Verfahren zum Anbringen einer Bürstenanordnung (24D, 24E) an einen Bürstenhalter, der an einer dynamoelektrischen Maschine angebracht ist, bei der eine Bürstenfeder (27) unter Druck zwischen einer Bürste (21) und einem Bürstenanschluss (25) angeordnet ist, und ein Anschlusskabel (26) unter Spannung, durch eine Kraft von der Bürstenfeder (27), zwischen der Bürste (21) und dem Bürstenanschluss (25) angeordnet ist, wobei das Verfahren die Schritte umfasst:
Vorsehen eines Führungselements innerhalb der Bürstenfeder, um Ausdehnung und Zusammendrücken der Bürstenfeder zu führen,
Einbringen der Bürste (21) in eine Bürsteneinbringöffnung (22a) des Bürstenhalters (22),
Anordnen der Bürstenfeder (27) in einem zusammengedrückten Zustand, mit vorbestimmter Länge, durch Verkürzen eines Abstands zwischen der Bürste (21) und dem Bürstenanschluss (25) unter Verwendung des Führungselements (61) als Führung,
in Kontakt bringen des Bürstenanschlusses (25) mit einem Halteranschluss (23) des Bürstenhalters (22),
Befestigen des Bürstenanschlusses (25) an einem Halteranschluss (23) des Bürstenhalters (22).

9. Verfahren gemäß Anspruch 8, bei dem
die Bürstenfeder vor dem Einbringen der Bürste in die Bürsteneinbringöffnung in den zusammengedrückten Zustand gebracht wird;
die Bürste in die Bürsteneinbringöffnung eingebracht wird, während die Bürstenfeder (27) in dem zusammengedrückten Zustand, mit vorbestimmter Länge, gehalten wird;
nach dem Einbringen der Bürstenfeder in die Bürsteneinbringöffnung, die Bürstenfeder (27) aus dem zusammengedrückten Zustand, mit vorbestimmter Länge, gelöst wird.

10. Verfahren gemäß Anspruch 9, bei dem der Bürstenanschluss (25) eine Schnittöffnung (25c) und ein Verbindungssegment (25b), das an einem Kantenabschnitt der Schnittöffnung steht, aufweist, ein erstes Ende des Anschlusskabels (26) durch die Schnittöffnung (25c) von einer Seite nahe der Bürste (21) hindurch geführt wird, zurückgeführt wird, zu der Bürste hin geführt wird, und mit dem Verbindungssegment (25b) verbunden wird, und die Bürstenfeder (27) in dem zusammengedrückten Zustand, mit vorbestimmter Länge, durch Ausziehen eines ersten Endabschnittes des Anschlusskabels (26) durch die Schnittöffnung (25c) des Bürstenschlusses (25) angeordnet wird.

11. Verfahren gemäß Anspruch 8, bei dem der Schritt des Vorsehens des Führungselements den Schritt umfasst:
Einbringen eines Führungselements (61) zwischen dem Anschlusskabel (26) und der Bürstenfeder (27) der Bürstenanordnung (24F), wobei das Anschlusskabel unter Spannung angeordnet ist.

## Revendications

1. Machine dynamo-électrique comprenant :
un boîtier (3) ;
un arbre (6), des première et seconde extrémités dudit arbre (6) étant supportées avec faculté de rotation dans ledit boîtier (3) ;
un rotor (7) fixé audit arbre et disposé avec faculté de rotation à l'intérieur dudit boîtier ;
une bague collectrice (9) fixée audit arbre ;
un stator (8) fixé audit boîtier de façon à entourer ledit rotor ;
un porte-balais (22) à travers lequel une ouverture d'insertion de balai (22a) est disposée, une borne de porte-balais (23) étant disposée sur une portion de bord d'ouverture de ladite ouverture d'insertion de balai, et un couvercle (29) étant monté sur une portion de tête dudit porte-balais (22), ledit porte-balais étant disposé à l'intérieur dudit boîtier de telle sorte qu'une direction d'ouverture de ladite ouverture d'insertion de balai est perpendiculaire à une direction axiale dudit arbre ;
un ensemble de balais (24, 24A, 24B, 24C, 24D, 24E) monté sur ledit porte-balais (22) ;
une portion d'ouverture (30) formée dans une portion dudit boîtier faisant face audit couvercle (29) ; et
un bouchon (40) pour couvrir ladite portion d'ouverture (30),
dans laquelle ledit ensemble de balais est construit de telle sorte qu'un balai (21) et une borne de balai (25) sont reliés au moyen d'une queue de cochon (26), et un ressort de balai (27) est disposé en compression entre ledit balai et ladite borne de balai,
dans laquelle ledit balai (21) est logé à l'intérieur de ladite ouverture d'insertion de balai (22a), ladite borne de balai (25) est fixée à ladite borne de porte-balais (23), et ledit balai (21) est placé en contact avec ladite bague collectrice (9) par une force provenant dudit ressort de balai (27), et
**caractérisée en ce qu'**un organe de guidage (50, 51, 52, 53, 54, 55, 56, 57, 58, 59) pour guider l'extension et la compression dudit ressort de balai est disposé à l'intérieur dudit ressort de balai.

2. Machine dynamo-électrique selon la revendication 1, dans laquelle ledit organe de guidage est doté d'un premier guide cylindrique (51, 52, 54, 56) disposé de telle sorte que ladite queue de cochon (26) passe à travers une portion intérieure et sa première extrémité est en contact avec ladite borne de balai (25).

3. Machine dynamo-électrique selon la revendication 2, dans laquelle ledit premier guide (51) est formé de telle sorte qu'un diamètre interne augmente progressivement de la première extrémité vers une seconde extrémité.

4. Machine dynamo-électrique selon la revendication 2, dans laquelle ledit premier guide (51) est construit avec une section en forme de C dans laquelle une fente (51d) est formée de façon à s'étendre de la première extrémité à une seconde extrémité.

5. Machine dynamo-électrique selon la revendication 2, dans laquelle ledit organe de guidage est doté d'un second guide (53, 55) disposé de telle sorte que ladite queue de cochon (26) passe à travers une portion intérieure et sa première extrémité est en contact avec ledit balai (21).

6. Machine dynamo-électrique selon la revendication 5, dans laquelle lesdits premier et second guides (54, 55) sont chacun formés d'une pluralité de fentes (54d, 55d) dans une direction circonférentielle, chaque fente (54d, 55d) étant formée de façon à s'étendre d'une première portion d'extrémité à une seconde extrémité, lesdits premier et second guides (54, 55) étant disposés de telle sorte que lorsque ledit ressort de balai (27) est dans un état comprimé, des pièces de tenon (55e) formées entre lesdites fentes (55d) dudit second guide (55) sont insérées dans lesdites fentes (54d) dudit premier guide (54), et des pièces de tenon (54e) formées entre lesdites fentes (54d) dudit premier guide (54) sont insérées dans lesdites fentes (55d) dudit second guide (55).

7. Machine dynamo-électrique selon la revendication 1, dans laquelle ledit organe de guidage est construit de telle sorte qu'une pluralité de guides (56, 57, 58) ayant chacun un diamètre différent sont agencés et reliés de façon extensible et compressible dans un ordre de diamètre décroissant, ladite pluralité de guides étant disposée entre ladite borne de balai (25) et ledit balai (21) de sorte que le premier guide (56) ayant un diamètre le plus grand est en contact avec l'un ou l'autre de ladite borne de balai (25) et dudit balai (21), et le second guide (57) ayant un diamètre le plus petit est en contact avec l'autre de ladite borne de balai (25) et dudit balai (21).

8. Procédé de montage sur un porte-balais monté sur une machine dynamo-électrique d'un ensemble de balais (24D, 24E) dans lequel un ressort de balai (27) est disposé sous compression entre un balai (21) et une borne de balai (25), et une queue de cochon (26) est disposée sous tension entre ledit balai (21) et ladite borne de balai (25) par une force provenant dudit ressort de balai (27), ledit procédé comprenant les étapes de :
fourniture d'un organe de guidage à l'intérieur dudit ressort de balai pour guider l'extension et la compression dudit ressort de balai ;
insertion dudit balai (21) dans une ouverture d'insertion de balai (22a) dudit porte-balais (22),
mise en place dudit ressort de balai (27) dans un état comprimé ayant une longueur prédéterminée en raccourcissant une distance entre ledit balai (21) et ladite borne de balai (25) en utilisant ledit organe de guidage (61) en tant que guide,
mise en place de ladite borne de balai (25) en contact avec une borne de porte-balais (23) dudit porte-balais (22),
fixation de ladite borne de balai (25) à une borne de porte-balais (23) dudit porte-balais (22).

9. Procédé selon la revendication 8, dans lequel :
le ressort de balai est placé dans l'état comprimé avant insertion du balai dans l'ouverture d'insertion de balai ;
le balai est inséré dans l'ouverture d'insertion de balai tout en maintenant ledit ressort de balai (27) dans ledit état comprimé ayant une longueur prédéterminée ; et
à la suite de l'insertion du ressort de balai dans l'ouverture d'insertion de balai, ledit ressort de balai (27) est libéré dudit état comprimé ayant une longueur prédéterminée.

10. Procédé selon la revendication 9, dans lequel ladite borne de balai (25) a une ouverture découpée (25c) et un segment de jonction (25b) se tenant sur une portion de bord de ladite ouverture découpée, une première extrémité de ladite queue de cochon (26) passant à travers ladite ouverture découpée (25c) depuis un côté à proximité dudit balai (21), étant retournée, et dirigée vers ledit balai, et reliée audit segment de jonction (25b), et ledit ressort de balai (27) étant placé dans ledit état compressé ayant une longueur prédéterminée en tirant une première portion d'extrémité de ladite queue de cochon (26) vers l'extérieur à travers ladite ouverture découpée (25c) de ladite borne de balai (25).

11. Procédé selon la revendication 8, dans lequel l'étape de fourniture de l'organe de guidage comprend l'étape
d'insertion d'un organe de guidage (61) entre ladite queue de cochon (26) et ledit ressort de balai (27) dudit ensemble de balais (24F) avec ladite queue de cochon disposée sous tension.
